# EUROPEAN PATENT APPLICATION

(11) **EP 3 416 360 A1**
(43) Date of publication of application: **19.12.2018**
(21) Application number: 17175483.1
(22) Date of filing: 12.06.2017
(51) Int. Cl.: H04M 3/54, H04M 3/436, H04W 4/16, H04M 3/42, H04W 88/04

(54) **A METHOD OF PROCESSING INCOMING CALLS**

(71) Applicant: The Swatch Group Research and Development Ltd, 2074 Marin (CH)
(72) Inventor: Mosteiro Vazquez, Yoann, 2016 Cortaillod (CH)
(74) Representative: ICB SA

(57) **Abstract**

The present invention relates to a method for a relay module (9) to process an incoming call received from a first phone (3) and directed to a second phone (11). The relay module (9) is arranged to communicate with the second phone (11). The method comprises the relay module (9) carrying out the following steps: (a) receiving an incoming call from the first phone (3) via the second phone (11); (b) determining a priority value of the incoming call; (c) determining whether or not to notify a wireless communication device (5) being able to wirelessly communicate with the relay module (9) of the incoming call, the determination depending on the priority value; and (d) selecting, if it was determined to notify the wireless communication device of the incoming call, a notification type, the selection depending on the priority value.

## Description

### Technical field

The present invention relates to a method for a relay module to process incoming calls. More specifically, the relay module is arranged to determine whether or not to notify a wireless communication device, such as a wrist watch, of the incoming call. The invention also relates to the relay module.

### Background of the invention

In various activities, for example in sport and/or outdoor activities, a handheld telephone, such as a smartphone, is often used together with a wrist watch, such as a sport watch. However, handheld phones are becoming heavier and bigger, and for this reason it would often be convenient to leave the phone at home, in a tent or in a car for example. However, this has traditionally been disadvantageous because then certain functionalities of the phone would not be available. For example, not having a phone at hand would mean that it would not be possible to receive incoming calls.

### Summary of the invention

It is an object of the present invention to overcome at least some of the problems identified above.

According to a first aspect of the invention, there is provided a method for a relay module to process an incoming call received from a first phone and directed to a second phone as recited in claim 1.

The proposed new call processing method has the advantage that it is possible to notify the wireless communication device, such as a wrist watch, of an incoming call even if the user of the watch does not have their phone nearby. For this purpose, the relay module, which may be a dedicated relay module or unit, is used. The relay module is arranged to communicate with a mobile phone of the user of the watch. Furthermore, according to the present invention, an intelligent notification is used such that the manner how an incoming call is notified to the watch depends on a priority value of the incoming call. In other words, the notification type depends on the detected priority value. The notification type may be for example a text message or a phone call (more specifically a forwarded incoming call). Optionally, a time instant of the notification also depends on the priority value of the incoming call. Thus, it is possible to obtain a solution according to which only urgent calls are notified to the watch, while calls with a low priority value may only be accessed from the mobile phone of the user of the watch and/or they may be notified to the watch at a later time instant.

According to a second aspect of the invention, there is provided a relay module as recited in claim 17.

Other aspects of the invention are recited in the dependent claims attached hereto.

### Brief description of the drawings

Other features and advantages of the invention will become apparent from the following description of a non-limiting example embodiment, with reference to the appended drawings, in which:
- Figure 1 is a simplified block diagram illustrating some elements of a communication system according to one example of the present invention; and
- Figure 2 is a simplified block diagram illustrating the relay module used for conveying notifications and optionally for establishing a communication session according to one example of the present invention.

### Detailed description of the invention

An embodiment of the present invention will now be described in detail with reference to the attached figures. The invention will be described in the context of a wrist watch communicating with a mobile or cellular phone. However, the invention is not limited to this context. The teachings of the present invention are applicable to other types of communication devices as well. Identical or corresponding functional and structural elements which appear in different drawings are assigned the same reference numerals.

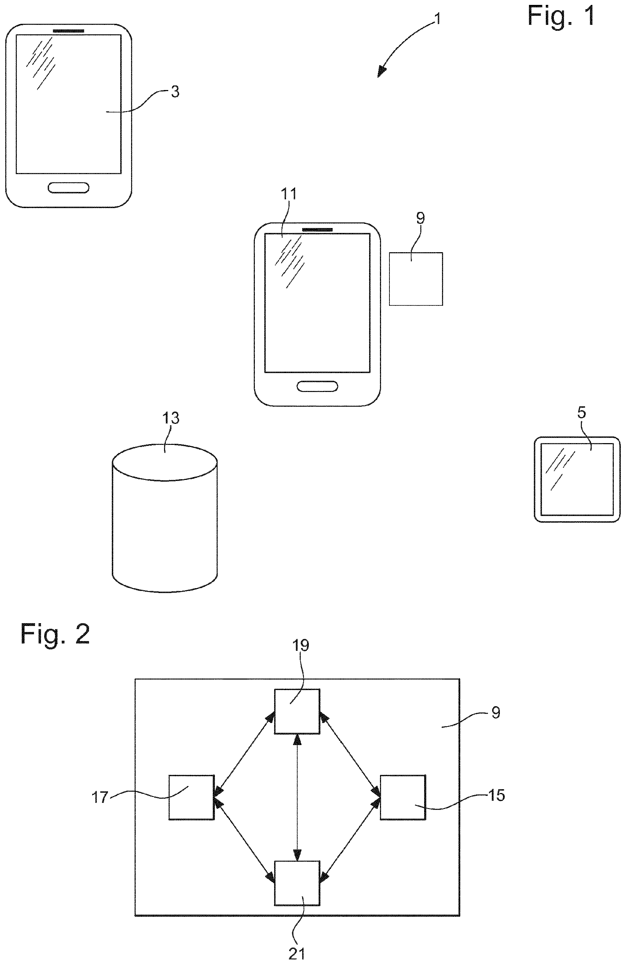

Figure 1 shows a block diagram illustrating in a simplified manner some communication network elements of a communication system 1, which are useful for understanding the teachings of the present invention. According to the present invention, a first wireless communication device 3, in this example a first handheld telephone, such as a smartphone, referred to as a first mobile phone, is arranged to communicate with a second wireless communication device 5, in this example a timepiece, referred to a as wrist watch, or simply a watch. The watch 5 may have many functionalities such as automatic timekeeping, weather forecasting, satellite positioning, heart rate measuring, data processing related to various activities exercised, electronic payment (by using near field communication for instance), data storage (e.g. for storing user blood type and/or performances), finding a lost item (such as the watch 5) etc. The communication between the first mobile phone 3 and the watch 5, which is not necessarily equipped with 3G-4G RF means or the like in order to save power, is arranged to take place through a third wireless communication device 9, which in this example is a portable or handheld relay module or unit 9 and is arranged to be connected either with a wired or wireless connection to a fourth wireless communication device 11, which in this example is a second handheld telephone 11, referred to simply as a second mobile phone. In this example, the watch 5 and the relay module 9 both have radio frequency (RF) communication means for communicating bidirectionally and wirelessly with each other over a distance of 0 to 15 km typically. This type of long range RF communication does not need a sophisticated infrastructure like a cellular network but uses only a pairing-bonding procedure, so that it can be used even if the user is in poor cellular coverage area with his watch. In Figure 1, there is also shown a home operator processing unit 13 and/or database. Here the home operator refers to the operator of the second mobile phone 11. A wired and/or wireless communication link can be established between the home operator processing unit 13 and/or the second mobile phone 11 and/or the relay module 9. For simplicity, further communication network elements, such as base stations, are not shown in Figure 1.

Figure 2 is a simplified block diagram of the relay module 9 showing some elements of the relay module 9, which can be useful for understanding the teachings of the present invention. An RF communication unit 15 is used for communicating with the watch 5 and optionally also with the second phone 11 if the relay module 9 is arranged to communicate wirelessly with the second mobile phone 11. An interface unit 17 is provided for a wired connection with the second mobile phone 11. The interface unit 17 may also be used to receive and output commands from the user of the relay module 9. The interface unit 17 is connected to data processing means 19, which in turn are connected to a data storage unit 21. It is to be noted that the relay module 9 may be charged while being connected to the second mobile phone 11 such that the energy for the charging is provided by the second mobile phone 11. However, instead of receiving the energy from the second phone 11, it may be possible to receive the energy required for the charging from an external energy unit (not illustrated in the drawings).

According to the present invention, under certain circumstances, a communication link can be established between the first mobile phone 3 and the watch 5 through the second mobile phone 11 and the relay module 9. In this illustrated example, the relay module 9 is a physically separate unit from the second mobile phone 11, although according to a variant of the present invention, the relay module 9 could be physically integrated with the second mobile phone 11 and thus be part of the second mobile phone 11. Furthermore, according to the present invention, a priority value or level of an incoming communication request, in this example an incoming call, from the first mobile phone 3 is determined and the incoming call is processed or handled according to the determined priority value. In other words, a notification type depends on the determined priority value. Various priority (importance) values may be defined. In this example, three values are defined, namely a first priority value, referred to as a high priority value, a second priority value, referred to as a medium priority value, and a third priority value, referred to as a low priority value. For example, if it is determined that the communication request has a low priority value (the priority value being below a threshold), then the watch 5 may not be notified at all of the communication request. On the other hand, if a high priority value is detected (the priority value being above another threshold), then it may be possible to establish a bidirectional, substantially live voice (optionally with video) communication link between the first mobile phone 3 and the watch 5. Furthermore, if a medium priority value is detected, then the watch 5 may be informed about the incoming communication request with a text message, which may be preregistered. For this purpose any suitable text message service may be used, such as a short message service (SMS), WhatsApp®, Viber® etc. The text message may show any or a combination of the following information: an identity of a party who initiated the incoming call, a time stamp of the incoming call etc. Furthermore, as in this situation the first mobile phone 3 is not able to establish a live communication session with the second mobile phone 11, the user of the first mobile phone 3 may leave a voice message, which is converted into a text message (for example by the home operator processing unit 13, the mobile phone 11 or the relay module 9) and then included in the notification.

In the above example, three priority values were used. However, it is possible that more or fewer priority values are used. In this example, there are six priority values, the highest priority being number six and the lowest priority being number one. For example, if the priority value is detected to be above a first threshold, such as value four, then the incoming call is forwarded to the watch 5. If the priority value is below a second threshold, such as value three, then no notification is issued. However, if the following holds: the second threshold ≤ the priority value ≤ the first threshold, then the notification is a text message.

Optionally a time aspect may also be taken into account when handling the incoming call such that if the incoming call has a high priority value, then the watch 5 may be immediately notified of the incoming communication request. If the incoming communication request has a medium priority value, then a first delay may be introduced for the notification. The first delay may be defined by the user of the watch 5 (which typically is the same as the user of the second mobile phone 11). A second delay for the notification may be introduced if the incoming communication request has a low priority value. The second delay is greater than the first delay.

The processing unit 13 of the home operator may be requested to play a (preregistered) message for any or a predetermined communication party initiating a call addressed to the second mobile phone 11 (or more specifically to its subscriber identification module). A user of the second mobile phone 11 may define when the message is played and/or to whom. For example, it is possible to define that the message is always played or only when specifically requested or during a given time period. The length of the period may vary depending on the user's preferences. For instance, the length of the time period may be one or more hours (which may correspond to a length of a given sport activity), or it may be several days (which may correspond to a length of a weekend or a holiday). The user of the second mobile phone 11 may be able to communicate with the processing unit 13 at any moment to change the preferences. The interface unit 17 comprising suitable software may be used for this purpose. It is also possible that the message is only played when the relay module 9 is connected to the second phone 11. Thus, in this case the second mobile phone 11 would detect when the relay module 9 is connected to it and instruct the processing unit 13 to play the message for any incoming call received and directed to the second mobile phone 11 during the time when the relay module 9 is connected to the second phone 11. It is also possible that the relay module 9 informs the processing unit 13 directly without having to involve the second mobile phone 11. The message may be for instance a voice message requesting the party sending the communication request to indicate a priority value (e.g. select one of the given alternatives: high, medium or low priority value) for the communication request. According to a variant of the present invention, the processing unit 13 is not involved in the process, but the message would be played directly by the second mobile phone 11 as soon as an incoming call is detected.

The user of the second mobile phone 11 may be also given the possibility to determine how many priority values or levels there are and how the incoming calls should be handled when a specific priority value is detected. The user of the first mobile phone 3 may respond to the played message for instance by selecting and pressing a number corresponding to the desired priority level. The user selection (the selected priority value) is then detected for instance by the processing unit 13 and/or the second mobile phone 11 and/or the relay module 9. It is also possible that the user of the first mobile phone 3 vocally responds to the played message. The voice response may then be interpreted by the processing unit 13 and/or the second mobile phone 11 and/or the relay module 9.

The priority may also be automatically determined by analysing the phone number of the first phone or any other identifier associated with the incoming call. For instance, it may be defined that specific phone numbers of a preconfigured list are associated with a high, medium or low priority. It may also be defined that all phone numbers that do not belong to this list are associated with a high, low or medium priority.

It is to be noted that a call may also be initiated by the watch 5. Accordingly, the watch 5 may be able to initiate a bidirectional, substantially live voice communication session with the first mobile phone 3 (or with any other phone) through the relay module 9 and the second mobile phone 11. Instead of the voice communication session, data may be transferred by text messages. Again, preregistered messages may be used. Furthermore, data may be synchronised between the second mobile phone 11 and the watch 5 so that for example contacts saved on the second mobile phone 11 or somewhere else may be uploaded to the watch 5 so that the user of the watch 5 can easily select the desired communication party.

It is to be noted that the watch 5 may also use the temporarily fixed location of the second mobile phone 11 to obtain a precise location of the watch 5. The location of the second mobile phone 11 can be obtained by any suitable satellite positioning means, such as the global positioning system (GPS). The second mobile phone 11 may send (e.g. at regular time intervals) the location coordinates optionally together with a time stamp to the watch 5. The watch 5 and/or the second mobile phone 11 can then determine a time that a message takes to travel between the watch 5 and the second mobile phone 11 in order to determine the distance between the watch 5 and the second mobile phone 11. Thus, the location of the second mobile phone 11 may be used as a supplementary location beacon for determining an accurate location of the watch 5 by using any suitable satellite positioning system.

While the invention has been illustrated and described in detail in the drawings and foregoing description, such illustration and description are to be considered illustrative or exemplary and not restrictive, the invention being not limited to the disclosed embodiment. Other embodiments and variants are understood, and can be achieved by those skilled in the art when carrying out the claimed invention, based on a study of the drawings, the disclosure and the appended claims.

In the claims, the word "comprising" does not exclude other elements or steps, and the indefinite article "a" or "an" does not exclude a plurality. The mere fact that different features are recited in mutually different dependent claims does not indicate that a combination of these features cannot be advantageously used. Any reference signs in the claims should not be construed as limiting the scope of the invention.

## Claims

1. Method for a relay module (9) to process an incoming call received from a first phone (3) and directed to a second phone (11), the relay module (9) being arranged to communicate with the second phone (11), the method comprising the relay module (9) carrying out the following steps:
- receiving an incoming call from the first phone (3) via the second phone (11);
- determining a priority value of the incoming call;
- determining whether or not to notify a wireless communication device (5) being able to wirelessly communicate with the relay module (9) of the incoming call, the determination depending on the priority value; and
- selecting, if it was determined to notify the wireless communication device (5) of the incoming call, a notification type, the selection depending on the priority value.

2. Method according to claim 1, wherein the wireless communication device (5) is a wrist watch (5).

3. Method according to any one of the preceding claims, wherein the relay module (9) is a portable unit connected to the second phone (11).

4. Method according to claim 3, wherein the relay module (9) is connected to the second phone (11) with a wired or wireless connection.

5. Method according to any one of the preceding claims, wherein the relay module (9) is embedded in the second phone (11).

6. Method according to any one of the preceding claims, wherein the notification type is a phone call if the priority value is determined to be above a first threshold value, and wherein the method further comprises the relay module (9) forwarding the incoming call to the wireless communication device (5).

7. Method according to claim 5 or claim 6, wherein the method further comprises establishing a substantially live bidirectional communication session between the first phone (3) and the wireless communication device (5) via the relay module (9).

8. Method according to any one of the preceding claims, wherein the notification type is a text message if the following holds: a second threshold value ≤ the determined priority value ≤ a first threshold value, wherein the first threshold value corresponds to a higher priority value than the second threshold value, and wherein the method further comprises the relay module (9) sending a text message to the wireless communication device (5) for informing the wireless communication device (5) about the incoming call.

9. Method according to any one of the preceding claims, wherein no notification is issued if the priority value is determined to be below a second threshold value.

10. Method according to any one of the preceding claims, wherein the method further comprises the relay module (9) notifying the wireless communication device (5) of the incoming call, if it was determined to notify the wireless communication device (5) of the incoming call, and wherein a time instant of notification depends on the priority value.

11. Method according to any one of the preceding claims, wherein the priority value is given by a user of the first phone (3).

12. Method according to any one of the preceding claims, wherein the method further comprises playing a preregistered message for a user of the first phone (3), prompting the user to give the priority value.

13. Method according to any of the preceding claims, wherein the method further comprises analysing an identifier associated with the incoming call, said identifier being for instance the phone number of the first phone (3), and determining the priority value based on said identifier.

14. Method according to claim 13, wherein the preregistered message is played for incoming calls received during a given period only, the period being defined by a user of the wireless communication device (5).

15. Method according to claim 13 or 14, wherein the preregistered message is played for incoming calls received from predetermined numbers only.

16. Method according to any one of the preceding claims, wherein the method further comprises:
- the second phone (11) determining its location;
- the second phone (11) sending its location to the wireless communication device (5);
- the wireless communication device (5) determining its distance to the second phone (11); and
- the wireless communication device (5) using the received location and the determined distance for determining its location.

17. Relay module (9) for processing an incoming call received from a first phone (3) and directed to a second phone (11), the relay module (9) being arranged to communicate with the second phone (11), the relay module (9) comprising means for:
- receiving an incoming call from the first phone (3) via the second phone (11);
- determining a priority value of the incoming call;
- determining whether or not to notify a wireless communication device (5) being able to wirelessly communicate with the relay module (9) of the incoming call, the determination depending on the priority value; and
- selecting, if it was determined to notify the wireless communication device (5) of the incoming call, a notification type, the selection depending on the priority value.
